# FASCICULE DE BREVET EUROPEEN

(11) **EP 0 769 263 B1**
(45) Date de publication et mention de la délivrance du brevet: **07.01.1999**
(21) Numéro de dépôt: 96402191.9
(22) Date de dépôt: 15.10.1996
(51) Int. Cl.: A47J 45/10

(54) **Dispositif de préhension amovible pour récipient**
Abnehmbare Vorrichtung zum Greifen eines Geschirrs
Removable device for gripping a recipient

(30) Priorité: 17.10.1995 FR 9512154; 26.01.1996 FR 9600947
(43) Date de publication de la demande: 23.04.1997
(73) Titulaire: SEB S.A., 69130 Ecully (FR)
(72) Inventeur: Nicollet, Eric, 74150 Rumilly (FR); Brasset, Jean-François, 74960 Cran-Gevrier (FR)
(74) Mandataire: Keib, Gérard

(56) Documents cités:
- AU-A- 6 344 473
- FR-A- 1 326 544
- FR-A- 1 361 405
- FR-A- 2 484 820
- US-A- 1 453 543
- US-A- 2 137 180
- US-A- 2 200 432
- US-A- 2 808 284

## Description

La présente invention concerne un dispositif de préhension amovible pour récipient, et notamment pour ustensile culinaire.

On connaît des poêles ou des casseroles dont la queue ou les anses sont amovibles. Ces ustensiles sont équipés sur leur paroi externe d'un ou plusieurs éléments mâles de fixation, en forme de goujon ou autre, l'équipement possédant à son extrémité une forme femelle pouvant être introduite et retirée facilement de l'élément de fixation.

Ce type d'équipement nécessite par conséquent de prééquiper les récipients d'un élément de fixation, par soudage ou rivetage par exemple, ce qui complique la fabrication.

De plus cet élément extérieur est gênant pour l'emboîtement des différents ustensiles.

On connaît en outre un dispositif de préhension, décrit dans le brevet US 2 808 284 (cf. le préambule de la revendication 1), comprenant deux mâchoires adaptées à pincer le bord d'un récipient.

Cependant, la mâchoire mobile est déplacée en pivotement sur des tiges de guidage, ce qui assure un positionnement peu précis des mâchoires sur la jupe du récipient.

En outre, le déplacement en pivotement de l'organe mobile n'est adapté qu'à une seule épaisseur de jupe de récipient, les mâchoires n'étant plus parallèles en position fermée du dispositif de préhension pour d'autres épaisseurs de récipient.

La présente invention se propose de résoudre les inconvénients précités grâce à un dispositif de préhension amovible qui ne requiert pas de prééquipement des récipients, qui simplifie en outre la manipulation de ces récipients et est adaptable à des récipients différents en épaisseur.

Le dispositif de préhension visé par l'invention est amovible et est prévu pour un récipient, notamment un ustensile culinaire qui comporte une paroi latérale dite jupe ayant un bord recourbé.

Ce dispositif de préhension comprend deux organes formant pince montés sur un corps de préhension et ayant une extrémité de forme complémentaire respectivement à la surface intérieure et extérieure d'une partie de la jupe et du bord recourbé du récipient et des moyens de déplacement adaptés à déplacer ces organes l'un par rapport à l'autre entre une position ouverte et une position fermée dans laquelle les extrémités d'organes pincent la jupe du récipient, lesdits moyens de déplacement comprenant un levier monté en pivotement sur le corps de préhension entre une position écartée et une position escamotée à l'intérieur du corps de préhension.

Conformément à l'invention, le dispositif est caractérisé en ce que l'un des organes est mobile en translation par rapport au corps de préhension entre la position ouverte et la position fermée, et en ce qu'une lame formant bielle s'étend entre le levier et ledit organe mobile et est adaptée a déplacer l'organe mobile en translation lorsque le levier est pivoté.

Ainsi, par simple pincement de la jupe du récipient, on peut saisir le récipient par le dispositif de préhension. Le bord recourbé sert ainsi de butée sur les organes formant pince et tout glissement vertical est empêché. Le dispositif de préhension permet donc de saisir et de déplacer le récipient de manière très fiable.

De plus, ce dispositif de préhension ne nécessite pas de fixer des pièces supplémentaires adéquates sur les récipients.

On peut en outre saisir le récipient à n'importe quel endroit du bord du récipient. Il devient ainsi inutile de faire tourner le récipient sur lui-même pour l'orienter suivant un angle prédéterminé avant de le saisir.

Ce dispositif de préhension est adaptable à tout récipient à bord verseur, quel que soit son diamètre ou sa forme. En outre, quelle que soit l'épaisseur de la jupe du récipient, on obtient une fixation parfaite du dispositif de préhension, les extrémités des organes formant pince épousant les surfaces extérieures et intérieures de la jupe.

Le fait de pouvoir retirer la queue ou l'anse du récipient améliore la sécurité lors de l'utilisation de ces récipients, en supprimant les risques d'accrochage, pouvant provoquer le renversement accidentel du récipient, facilite le rangement dans les placards, dans les paniers du lave-vaisselle et donne la possibilité de mettre les articles au four.

Selon une version préférée de l'invention, ce dispositif comprend des moyens de verrouillage adaptés à maintenir les organes en position fermée l'un par rapport à l'autre.

Grâce à ces moyens de verrouillage, le dispositif de préhension peut rester solidaire du récipient tant que l'utilisateur le souhaite.

Selon une version avantageuse de l'invention, l'autre organe est fixe par rapport au corps de préhension.

Cette structure permet de faciliter le positionnement du dispositif de préhension sur le bord recourbé du récipient. En effet, on place l'organe immobile en contact avec la jupe du récipient, puis on actionne les moyens de déplacement pour pincer cette jupe. Le dispositif de préhension est ainsi fixé au récipient de manière précise.

D'autres particularités et avantages de l'invention apparaîtront encore dans la description ci-après.

Aux dessins annexés, donnés à titre d'exemples non limitatifs :
- la figure 1 est une vue en coupe d'un dispositif de préhension en position ouverte conforme à une première réalisation de l'invention ;
- la figure 2 est une vue du dispositif de préhension de la figure 1 en position fermée ; et
- la figure 3 est une vue en coupe d'un dispositif de préhension en position ouverte conforme à une deuxième réalisation de l'invention.

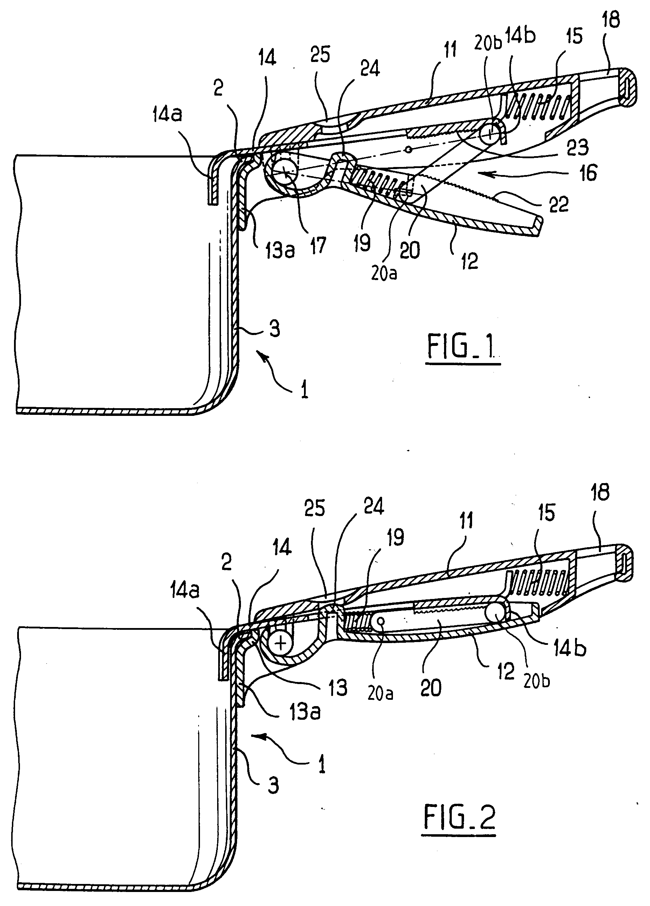

Un premier exemple de réalisation va tout d'abord être décrit en référence aux figures 1 et 2.

Le dispositif de préhension conforme à l'invention est prévu pour un récipient 1, du type ustensile culinaire (casserole, poêle, plat à four,...), comportant généralement un fond et une paroi latérale 3 dite jupe ayant un bord recourbé 2 qui forme un rebord verseur.

Ce dispositif de préhension comprend deux organes 13 et 14 formant pince montés sur un corps de préhension 11. Ce dernier a dans cet exemple la forme d'une queue de casserole avec en partie arrière une ouverture 18 pouvant permettre sa suspension à un crochet. Le dispositif de préhension pourrait également avoir la forme de poignées ou d'anses amovibles.

Les organes 13 et 14 ont chacun une extrémité, respectivement 13a et 14a sur la figure, qui a une forme complémentaire de la surface intérieure ou extérieure du bord recourbé et d'une partie de la jupe adjacente au bord 2.

Ici, l'extrémité 13a de l'organe 13 épouse la surface extérieure de la jupe et l'extrémité 14a de l'organe 14 épouse la surface intérieure de la jupe.

Des moyens de déplacement 12 sont adaptés à déplacer les organes 13 et 14 l'un par rapport à l'autre, entre une position ouverte, illustrée à la figure 1, et une position fermée, illustrée à la figure 2, dans laquelle les extrémités 13a et 14a pincent la jupe 3 du récipient 1.

Ces moyens de déplacement comprennent un levier 12 monté en pivotement sur le corps de préhension 11, entre une position écartée et une position escamotée à l'intérieur du corps de préhension 11.

Ce dernier comprend ainsi, un logement adapté à recevoir le levier en position escamotée, correspondant à la position fermée des organes 13 et 14 formant pince.

Ainsi, lorsque le dispositif de préhension est fixé sur le récipient 1, il a sensiblement la forme extérieure d'une queue classique de casserole.

Le levier 12 pivote autour d'un axe 17 du corps de préhension 11.

Des moyens de verrouillage 16, décrits ultérieurement, sont adaptés à maintenir les organes 13 et 14 en position fermée l'un par rapport à l'autre.

L'un des organes 14 est mobile en translation par rapport au corps de préhension 11.

Les extrémités 13a, 14a restent aussi parallèles l'une à l'autre lors de la fermeture du dispositif de préhension et sensiblement parallèles à la jupe 3 du récipient 1.

Le dispositif de préhension de l'invention permet donc d'équiper un récipient d'épaisseur quelconque, comprise dans la course maximale de la translation de l'organe mobile 14.

L'autre organe 13 est fixe par rapport au corps de préhension 11 et épouse la surface extérieure du rebord 2 du récipient 1.

Pour faciliter la manipulation par l'utilisateur et obtenir une meilleure ergonomie, le levier 12 d'actionnement du dispositif est fixé sous le corps de préhension 11.

Conformément à l'invention, l'organe 14 est mobile en translation par rapport au corps de préhension 11 et une bielle 20 s'étend entre le levier 12 et cet organe 14 et est adaptée à déplacer l'organe 14 en translation lorsque le levier 12 est pivoté.

Ainsi, lorsque le levier 12 est pivoté autour de son axe 17 solidaire du corps de préhension 11, l'extrémité 20a de la bielle 20 introduite dans le levier 12 est également pivotée en rotation de sorte qu'en fin de course du levier, la bielle 20 est alignée avec l'axe de translation de l'organe 14, c'est-à-dire l'axe longitudinal du corps de préhension 11.

L'organe mobile 14 a une extrémité 14b sur laquelle est appuyée l'autre extrémité 20b de la bielle 20.

Dans cet exemple, un ressort de compensation 19 est fixé à une de ses extrémités au levier, et à l'autre de ses extrémités, à l'extrémité 20a de la bielle 20 introduite dans le levier 2.

En position fermée, illustrée à la figure 2, le ressort de compensation 19 exerce ainsi une force à l'opposé du récipient 1 sur l'extrémité 14b de l'organe 14 par l'intermédiaire de la bielle 20 et permet ainsi d'ajuster l'écartement entre les deux organes 13 et 14 en fonction de l'épaisseur du récipient 1 et du diamètre. Tout jeu au niveau du serrage du rebord 2 par les organes 13 et 14 est ainsi éliminé. La bielle 20 et le ressort 19 forment ainsi des moyens de verrouillage 16 adaptés à maintenir les organes 13 et 14 en position fermée l'un par rapport à l'autre.

De préférence, en position fermée, au moins une portion de l'organe 14 mobile en translation et au moins une portion du levier 12 sont adjacentes l'une à l'autre, ces portions comportant des crémaillères 22, 23 complémentaires adaptées à s'engrener l'une dans l'autre et à maintenir immobile l'organe 14.

Ce système de crémaillère a ainsi une fonction de sécurité au cas où le ressort de compensation 19 est défectueux et n'exerce plus une force suffisante pour maintenir les organes 13 et 14 serrés contre le bord recourbé 2.

Un bouton de déverrouillage 24 est prévu sur le levier pivotant 12.

Le corps de préhension 11 comporte un évidement 25 disposé de telle sorte qu'en position fermée, le bouton de déverrouillage 24 est logé dans cet évidement 25 et traverse ainsi le corps de préhension 11.

Pour déverrouiller le dispositif de préhension, l'utilisateur appuie avec un doigt sur ce bouton 24.

Le ressort de compensation 19 et la bielle 20 ne sont donc plus alignés dans la direction de translation de l'organe mobile 14, un ressort de rappel 15, disposé entre le corps de préhension 11 et l'extrémité de l'organe mobile 14, étant adapté à exercer une force contraire à celle du ressort de compensation 19 sur l'organe 14 de façon à écarter l'un de l'autre les deux organes 13, 14 formant pince.

Il faut donc, lors du déverrouillage du dispositif à la fois appuyer sur le bouton de déverrouillage 24 et ne pas serrer le corps de préhension 11 du dispositif afin de permettre aux organes 13, 14 de s'écarter l'un de l'autre.

Ce dispositif de préhension amovible est donc d'une grande sécurité d'utilisation, car il ne peut en aucun cas s'ouvrir lorsque l'utilisateur serre le corps de préhension, notamment lors du déplacement du récipient, même si le bouton de déverrouillage est enfoncé accidentellement.

Le fonctionnement du dispositif conforme à l'invention oblige ainsi l'utilisateur lorsqu'il veut retirer ce dispositif, à poser au préalable le récipient de manière stable, afin de pouvoir relâcher la pression des doigts sur le corps de préhension en vue d'obtenir l'écartement des organes formant pince 13, 14.

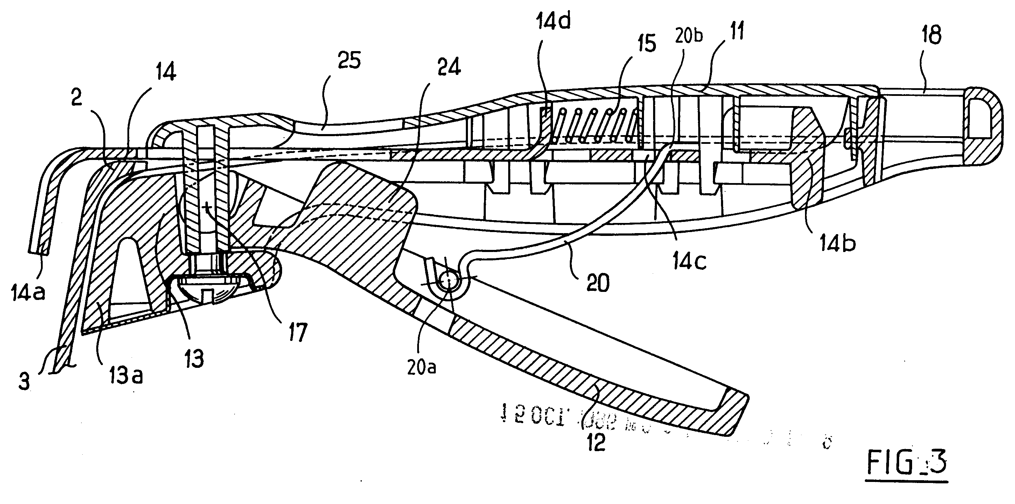

Un deuxième exemple de réalisation est représenté à la figure 3. Les éléments communs à l'exemple précédent et portant les mêmes références ne seront pas redécrits ci-dessus.

Dans cette réalisation, l'ensemble constitué par la bielle 20 et le ressort de compensation 19 est remplacé par une lame 20 jouant le rôle de bielle. Comme précédemment, la lame 20 a une extrémité 20a montée dans le levier 12 de sorte qu'elle pivote avec ce dernier lors de l'ouverture et la fermeture du dispositif.

L'autre extrémité 20b de la lame 20 n'est plus en appui sur l'extrémité 14b de l'organe mobile en translation mais vient en prise avec cet organe 14, au travers d'une ouverture 14c ménagée dans la longueur de l'organe mobile 14. La lame formant bielle 20 s'étend ainsi entre le levier 12 et l'organe 14 et est adaptée à déplacer ce dernier en translation lorsque le levier est pivoté.

La distance séparant l'extrémité 14a, venant en appui sur le bord 2 du récipient 1, et cette ouverture 14c, est déterminée de manière à permettre le pinçage par le dispositif du rebord des récipients de plus petit diamètre et épaisseur existants.

La lame 20 de par sa conception est suffisamment élastique pour pouvoir être légèrement comprimée lorsque le dispositif est fermé et ajuster ainsi l'écartement entre les deux organes 13 et 14 pour compenser les différents diamètres et les différentes épaisseurs des articles culinaires.

La lame 20 a ainsi un profil courbe entre ses deux extrémités montées respectivement sur l'organe mobile 14 et le levier 12, le rayon de courbure de ce profil étant légèrement diminué lorsque la lame est comprimée.

En position fermée du dispositif, la lame 20 s'étend dans une direction parallèle à l'axe de translation de l'organe mobile 14, c'est-à-dire perpendiculaire à la portion de jupe 3 du récipient 1 recevant le dispositif, et est adaptée à exercer une force sur l'extrémité 14a de l'organe mobile 14 et à exercer une force de même direction et de sens opposé sur l'extrémité 13a de l'autre organe 13. La lame formant bielle 20 joue ainsi le rôle du ressort de compensation 19 de l'exemple précédent de réalisation.

Comme précédemment, l'organe mobile 14 comprend une partie 14d formant une surface d'appui pour un ressort de rappel 15 disposé entre cette surface d'appui 14d et une portion solidaire du corps 11 du dispositif de préhension.

Bien entendu, de nombreuses modifications pourraient être apportées à l'exemple ci-dessus, sans sortir du cadre de l'invention.

Ainsi, le dispositif de préhension pourrait avoir un corps de préhension en forme d'anse.

## Revendications

1. Dispositif de préhension amovible pour récipient (1), notamment pour ustensile culinaire, le récipient (1) comportant une paroi latérale (3) dite jupe ayant un bord recourbé (2), ledit dispositif comprenant deux organes (13, 14) formant pince montés sur un corps de préhension (11) et ayant une extrémité (13a, 14a) de forme complémentaire respectivement à la surface intérieure et extérieure d'une partie de la jupe (3) et du bord recourbé (2) dudit récipient et des moyens de déplacement (12, 20) adaptés à déplacer lesdits organes (13, 14) l'un par rapport à l'autre entre une position ouverte et une position fermée dans laquelle lesdites extrémités (13a, 14a) d'organes pincent la jupe (3) du récipient (1), lesdits moyens de déplacement comprenant un levier (12) monté en pivotement sur le corps de préhension (11) entre une position écartée et une position escamotée à l'intérieur du corps de préhension (11) entre ladite position ouverte et ladite position fermée, caractérisé en ce que l'un des organes (14) est mobile en translation par rapport au corps de préhension (11) et en ce qu'une lame formant bielle (20) s'étend entre le levier (12) et ledit organe mobile (14) et est adaptée à déplacer l'organe mobile (14) en translation lorsque le levier (12) est pivoté.

2. Dispositif de préhension conforme à la revendication 1, caractérisé en ce qu'il comprend des moyens de verrouillage (16) adaptés à maintenir lesdits organes (13, 14) en position fermée l'un par rapport à l'autre.

3. Dispositif de préhension conforme à l'une des revendications 1 ou 2, caractérisé en ce que l'autre organe (13) est fixe par rapport au corps de préhension (11).

4. Dispositif de préhension conforme à l'une des revendications 1 à 3, caractérisé en ce qu'un ressort de compensation (19,20) s'étend dans la position fermée dans une direction parallèle à l'axe de translation dudit organe et est adapté à exercer une force sur l'extrémité (14a) dudit organe mobile en translation et à exercer une force de même direction et de sens opposé sur l'extrémité (13a) de l'autre organe.

5. Dispositif de préhension conforme à l'une des revendications 1 à 4, caractérisé en ce que le levier (12) est en position escamotée lorsque lesdits organes (13, 14) formant pince sont en position fermée, la lame formant bielle (20) s'étendant, dans ladite position fermée, dans une direction parallèle à l'axe de translation dudit organe mobile (14), et étant adaptée à exercer une force sur l'extrémité (14a) dudit organe (14) mobile en translation et à exercer une force de même direction et sens opposé sur l'extrémité (13a) de l'autre organe (13).

6. Dispositif de préhension conforme à l'une des revendications 1 à 5, caractérisé en ce que le levier (12) est fixé sous le corps de préhension (11).

7. Dispositif de préhension conforme à l'une des revendications 1 à 6, caractérisé en ce qu'au moins une portion de l'organe mobile (14) en translation et une portion du levier (12) sont adjacentes l'une à l'autre, dans ladite position fermée, lesdites portions comportant des crémaillères (22, 23) complémentaires adaptées à s'engrener l'une dans l'autre et à maintenir immobile ledit organe (14).

## Claims

1. A detachable gripper system for a vessel (1), inter alia a cooking utensil, the vessel (1) having a lateral wall (3) or "skirt" having a curved edge (2), the said system comprising two members (13, 14) which form a clamp and which are mounted on a gripper body (11) and which have one end (13a, 14a) of complementary shape respectively to the inner and outer surface of a part of the skirt (3) and of the curved edge (2) of the said vessel and movement means (12, 20) adapted to move the said members (13, 14) relatively to one another between an open position and a closed position in which the said member ends (13a, 14a) clamp the skirt (3) of the vessel (1), the said movement means comprising a lever (12) mounted for pivoting on the gripper body (11) between an extended position and a position retracted inside the gripper body (11) between the said open position and said closed position, characterised in that one of the members (14) is movable in translation relatively to the gripper body (11) and in that a strip forming a link (20) extends between the lever (12) and the said movable member (14) and is adapted to move the movable member (14) in translation when the lever (12) is pivoted.

2. A gripper system according to claim 1, characterised in that it comprises locking means (16) adapted to hold the said members (13, 14) in the closed position relative to one another.

3. A gripper system according to claim 1 or 2, characterised in that the other member (13) is fixed relatively to the gripper body (11).

4. A gripper system according to any one of the claims 1 to 3, characterised in that a compensation spring (19, 20) extends in the closed position in a direction parallel to the axis of translation of the said member and is adapted to exert a force on the end (14a) of the said member movable in translation and to exert a force of the same direction and of opposite sense on the end (13a) of the other member.

5. A gripper system according to any one of claims 1 to 4, characterised in that the lever (12) is in the retracted position when the said clamp-forming members (13, 14) are in the closed position, the link-forming strip (20) extending, in the said closed position, in a direction parallel to the axis of translation of the said movable member (14), and being adapted to exert a force on the end (14a) of the said member (14) movable in translation and to exert a force in the same direction and of opposite sense on the end (13a) of the other member (13).

6. A gripper system according to any one of claims 1 to 5, characterised in that the lever (12) is fixed beneath the gripper body (11).

7. A gripper system according to any one of claims 1 to 6, characterised in that at least a portion of the member (14) movable in translation and a portion of the lever (12) are adjacent one another, in the said closed position, the said portion comprising complementary racks (22, 23) adapted to engage in one another and hold the said member (14) immovable.

## Patentansprüche

1. Abnehmbare Greifvorrichtung für ein Gefäß (1), insbesondere für Kochgeschirr, wobei das Gefäß (1) eine als Mantel bezeichnete Seitenwand (3) mit einem umgebogenen Rand (2) umfaßt, wobei die Vorrichtung zwei Klemmeinrichtungen (13, 14) umfaßt, die an einem Greifkörper (11) befestigt sind und ein jeweils der Innen- und Außenfläche eines Teils des Mantels (3) und des umgebogenen Randes (2) des Gefäßes komplementäres Ende (13a, 14a) aufweisen und Verstellmittel (12, 20), die geeignet sind, die Klemmeinrichtungen (13, 14) zueinander zwischen einer geöffneten Stellung und einer geschlossenen Stellung zu verstellen, in welcher die Enden (13a, 14a) der Einrichtungen den Mantel (3) des Gefäßes (1) klemmend umgreifen, wobei die Verstellmittel einen Hebel (12) umfassen, der an dem Greifkörper (11) zwischen einer ausgeklappten Stellung und einer nach innen in den Greifkörper (11) eingeklappten Stellung zwischen der geöffnenten und der geschlossenen Stellung verschwenkbar befestigt ist, dadurch gekennzeichnet, daß die eine der Einrichtungen (14) gegenüber dem Greifkörper (11) verschiebbar ist und daß eine Platte in Form einer Koppel (20) sich zwischen dem Hebel (12) und der beweglichen Klemmeinrichtung (14) erstreckt und geeignet ist, die bewegliche Einrichtung (14) zu verschieben, wenn der Hebel (12) verschwenkt wird.

2. Greifvorrichtung nach Anspruch 1, dadurch gekennzeichnet, daß sie Verriegelungsmittel (16) aufweist, die geeignet sind, die Klemmeinrichtungen (13, 14) in zueinander geschlossener Stellung zu halten.

3. Greifvorrichtung nach einem der Ansprüche 1 oder 2, dadurch gekennzeichnet, daß die weitere Klemmeinrichtung (13) gegenüber dem Greifkörper (11) feststehend ausgebildet ist.

4. Greifvorrichtung nach einem der Ansprüche 1 bis 3, dadurch gekennzeichnet, daß eine Ausgleichsfeder (19, 20) sich in der geschlossenen Stellung in einer zu der Verschiebeachse der Klemmeinrichtung parallelen Richtung erstreckt und geeignet ist, eine Kraft auf das Ende (14a) der verschiebbaren Klemmeinrichtung auszuüben und eine Kraft derselben Ausrichtung und entgegengesetzter Richtung auf das Ende (13a) der weiteren Einrichtung auszuüben.

5. Greifvorrichtung nach einem der Ansprüche 1 bis 4, dadurch gekennzeichnet, daß der Hebel (12) sich in eingeklappter Stellung befindet, wenn die Klemmeinrichtungen in geschlossener Stellung sind, wobei die Platte in Form einer Koppel (20) sich in dieser geschlossenen Stellung parallel zur Verschiebeachse der beweglichen Einrichtung (14) erstreckt und geeignet ist, eine Kraft auf das Ende (14a) der verschiebbaren Einrichtung (14) auszuüben und eine Kraft derselben Ausrichtung und entgegengesetzter Richtung auf das Ende (13a) der weiteren Einrichtung (13) auszuüben.

6. Greifvorrichtung nach einem der Ansprüche 1 bis 5, dadurch gekennzeichnet, daß der Hebel (12) unter dem Greifkörper (11) befestigt ist.

7. Greifvorrichtung nach einem der Ansprüche 1 bis 6, dadurch gekennzeichnet, daß wenigstens ein Abschnitt der verschiebbaren Einrichtung (14) und ein Abschnitt des Hebels (12) in der geschlossenen Stellung einander benachbart sind, wobei die Abschnitte komplementäre Verzahnungen (22, 23) aufweisen, die geeignet sind, ineinanderzugreifen und die Einrichtung (14) unbeweglich zu halten.
